**Europäisches Patentamt**

**European Patent Office**

**Office européen des brevets**

(19)

(11) Publication number: **0 083 329**
**A2**

(12) # EUROPEAN PATENT APPLICATION

(21) Application number: **82850263.3**

(22) Date of filing: **21.12.82**

(51) Int. Cl.³: **H 01 G 13/00**

(30) Priority: **30.12.81 SE 8107881**

(43) Date of publication of application:
**06.07.83 Bulletin 83/27**

(84) Designated Contracting States:
**DE FR GB IT NL**

(71) Applicant: **TELEFONAKTIEBOLAGET L M ERICSSON**

**S-126 25 STOCKHOLM(SE)**

(72) Inventor: **Sternbeck, Olaf**
**Hugleiksvägen 18**
**S-161 54 Bromma(SE)**

(74) Representative: **Johansson, Lars E. et al,**
**Telefonaktiebolaget L M Ericsson Patent Department**
**S-126 25 Stockholm(SE)**

(54) Device in encapsulating electric capacitors in thermosetting resin.

(57) A device in encapsulating an electric capacitor member (6) in a thermosetting resin by means of mulding without using a vacuum. The device comprises an insulating lamina (1) intended for placing in a mould (7) before the capacitor member (6) is inserted into the mould. The lamina is preformed to suit the mould and is provided with protuberances (2, 4) on its surface to give a space between it and the inner surfaces of the mould. Furthermore, there are holes (3) made in the lamina surface facing towards the bottom surface of the mould, for allowing the flow of resin through the lamina from the volume enclosed therewith to the space between lamina and mould.

Fig. 1

Croydon Printing Company Ltd

# DEVICE IN ENCAPSULATING ELECTRIC CAPACITORS IN THERMOSETTING RESIN

## TECHNICAL FIELD

The present invention relates to a device in encapsulating electronic components, especially electrical capacitors, by moulding in thermosetting resin.

## BACKGROUND ART

Electrical capacitors are usually provided with some form of casing. This may have a plurality of functions, such as preventing the entry of moisture, mechanically unloading electrical terminals, preventing undesired electrical contact between some part of the capacitor member and the surroundings etc. It is naturally desirable, especially with otherwise small dimensions of the capacitor, that the casing is made as small as possible while meeting the electrical requirements.

One method of providing such a protective casing is to mould the capacitor member into a liquid thermosetting resin of epoxy, polyester, polyurethane or other similar type. An example of the mould used here could be one into which the capacitor member is lowered, the mould then being filled with the resin, which is afterwards cured. In the prior art, the mould may in itself be a relatively thin-walled container of electrically insulating material, which is allowed to remain after moulding to form an integrated portion of the capacitor casing. With this method, a least casing thickness is consequently defined by the thickness of the container wall, and centering the capacitor member in the container during moulding is of minor importance.

In an alternative method, the resin-imbedded capacitor member is separated from the mould after moulding. In this case the mould is a cavity which can be utilized for repeated moulding.

It is quite clear that centering the capacitor member in the mould during moulding in this latter case is essential to the result. Uncertainty in the centering operation can naturally be compensated within reasonable limits by

a thicker layer of resin, so that the prescribed electrical properties are achieved in any case, but the volume of the finished product is generally a disadvantage when thus increased.

A method of solving the problem of centering in the mould is apparent from the British Patent GB 1.062.629, according to this publication a spacer material in the form of a corrugated strip of paper or plastics is wrapped round the capacitor member before it is put into place in the mould. Centering will be incomplete however, since it only acts in two dimensions, e g width and length.

In order to prevent air bubbles occuring at the surface of the capacitor, or in the rest of the resin casing, the resin must be poured in under vacuum. This is no disadvantage for capacitors with paper as a dielectric, since the same resin can be utilized for impregnating the capacitor winding as for forming the casing itself, although vacuum must still be used.

DISCLOSURE OF INVENTION

For many types of plastic film capacitors the winding does not need to be impregnated. In the manufacture of such capacitors, it would therefore be a clear advantage if the expensive manufacturing steps using vacuum could be eliminated without the above-mentioned problem with air bubbles arising.

The problem with air bubbles occurring during filling with resin without vacuum appears to be connected with the fact that devices used up to now have been in contact with the mould here and there, thus forming areas where the resin can advance from two directions and close in an air bubble.

The present invention proposes a solution of this problem, and is thereby characterized as will be apparent from the appended claims.

The advantage of the device in accordance with the invention is primarily that it enables elimination of manufacturing steps previously carried out in vacuum in the resin moulding of capacitors.

## BRIEF DESCRIPTION OF DRAWING

The invention will now be described with reference to the appended drawing, on which
Figure 1 illustrates a first embodiment of the invention,
Figure 2 illustrates a second embodiment of the invention, and
Figure 3 illustrates an operation in an advantageous moulding method utilizing the invention.

## MODE FOR CARRYING OUT THE INVENTION

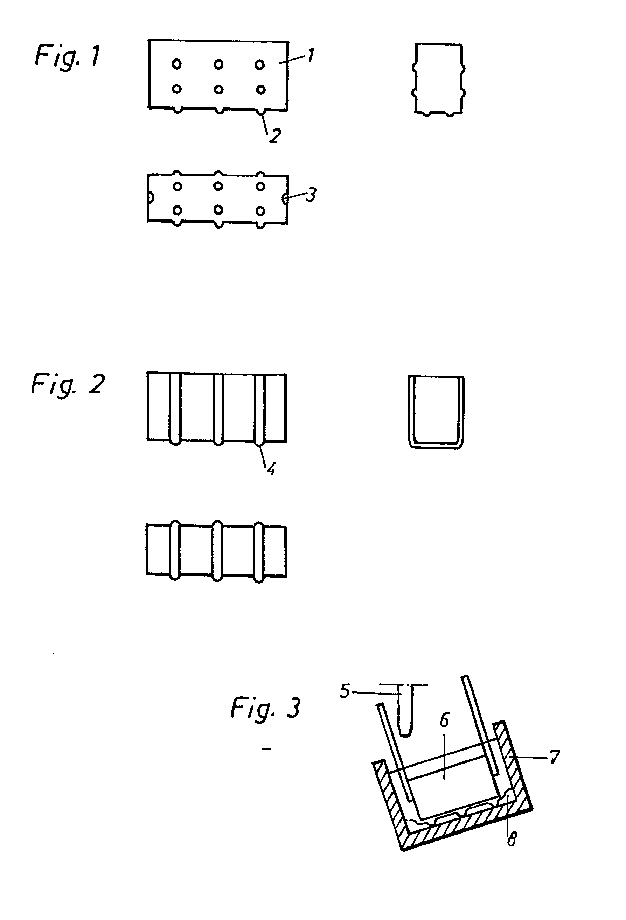

Figure 1 illustrates in three views an embodiment of a centering spacing device in accordance with the invention. The device comprises a preformed insulation lamina 1, intended for placing in the mould before the capacitor winding is lowered into it. The lamina surface has been provided, e g by embossing with a plurality of dot-like protuberances 4 acting as spacers in relation to the form. The surface of the insulating lamina, facing towards the bottom of the mould in its installed position, has furthermore been provided with openings 3. The protuberances provide a gap or spacing preferably exceeding 0,1 mm. The material in the lamina can be some suitable plastics such as polyester, polycarbonate or the like. When more effective moisture protection is required, a metal foil coated with plastics on either side may be used. As the mould is being filled, the resin will run down and out through the openings in the bottom part of the lamina and rise up between lamina and mould, thereby urging the air before it until the mould is filled. Thus, no enclosed air bubbles will be formed.

Figure 2 illustrates an embodiment of the invention in which the gap-forming impressions comprise ridge-like protuberances.

Figure 3 illustrates an operation in an advantageous moulding method utilizing the invention. The resin is applied via a nozzle 5 to the mould 7 with the capacitor winding 6 and lamina 8. In a first operation, the mould 7 is inclined as illustrated in the figure, and resin is filled within the space defined by the lamina up to the edge of the mould. As previously described, the resin will run down and out through the openings in the lower part of the lamina and then

4

rise up between lamina and mould. The mould is slowly caused to return to its horizontal position, after which more resin is filled. By suitably adjusted times for the different operations with regard to the viscosity of the resin the latter will urge the air in front of it until the mould is filled.

CLAIMS

1    Device in encapsulating an electric capacitor member (6) in a thermosetting plastic by means of moulding without the use of vacuum, said device being an insulating lamina (1) intended for placing in a mould (7) before the capacitor member (6) is inserted therein, characterized in that

a)    the lamina is preformed to fit into the substantially parallelepipedic mould (7) and thereby has a bottom surface and at least two side surfaces,

b)    the surfaces of the lamina are provided with protuberances (2, 4) which provide a space between the inner surfaces of the mould and the lamina (1),

c)    the bottom surface of the lamina is provided with holes (3) through which resin can flow from the volume enclosed by the lamina to the space between lamina (1) and mould (7) during the pouring process.

2    Device as claimed in claim 1, characterized in that said protuberances (2) are dot-like.

3    Device as claimed in claim 1, characterized in that said protuberances (4) are shaped like ridges.

4    Device as claimed in claim 1, characterized in that the lamina (1) is of metal coated with plastics on at least one side.

5    Device as claimed in claim 1, characterized in that the lamina is of plastics such as polyester or polycarbonate.

Fig. 1

Fig. 2

Fig. 3